(19) Europäisches Patentamt
European Patent Office
Office européen des brevets

(11) Veröffentlichungsnummer : **0 068 399**
**B2**

(12) **NEUE EUROPÄISCHE PATENTSCHRIFT**

(45) Veröffentlichungstag der neuen Patentschrift : **09.09.87**

(51) Int. Cl.[4] : **A 01 N 33/12**

(21) Anmeldenummer : **82105442.6**

(22) Anmeldetag : **22.06.82**

# (54) Flüssige Desinfektionsmittel-Konzentrate.

(30) Priorität : **27.06.81 DE 3125377**

(43) Veröffentlichungstag der Anmeldung : **05.01.83 Patentblatt 83/01**

(45) Bekanntmachung des Hinweises auf die Patenterteilung : **07.11.84 Patentblatt 84/45**

(45) Bekanntmachung des Hinweises auf die Entscheidung über den Einspruch : **09.09.87 Patentblatt 87/37**

(84) Benannte Vertragsstaaten :
**AT BE CH DE FR GB IT LI NL SE**

(56) Entgegenhaltungen :
**DE-C- 680 599**
**GB-A- 1 165 007**
**US-A- 3 803 137**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Hartung, Herbert, Dr.**
**Hochriesstrasse 1**
**D-8261 Burgkirchen/Alz (DE)**
Erfinder : **Müller, Heinz, Dr.**
**Kantstrasse 43**
**D-8261 Burgkirchen/Alz (DE)**
Erfinder : **Bücking, Hans-Walter, Dr.**
**In den Padenwiesen 30**
**D-6233 Kelkheim (Taunus) (DE)**
Erfinder : **May, Adolf, Dr.**
**Dahlienweg 5**
**D-6238 Hofheim am Taunus (DE)**
Erfinder : **Wallhäusser, Karl Heinz, Prof. Dr.**
**Lessingstrasse 20**
**D-6238 Hofheim am Taunus (DE)**

**EP 0 068 399 B2**

Jouve, 18, rue St-Denis, 75001 Paris, France

**Beschreibung**

Die Erfindung betrifft flüssige, mit Wasser verdünnbare Desinfektionsmittel-Konzentrate auf der Basis quaternärer Ammoniumverbindungen.

Alkyl-dimethyl-benzylammoniumverbindungen (« Benzalkonium-verbindungen »), die einen langkettigen Alkylrest am quartären Stickstoffatom haben, besitzen überragende bakterizide Eigenschaften (DE-PS 680 599) und sind als Desinfektionsmittel seit langem in weitverbreitetem Gebrauch. Sie werden üblicherweise in Form von etwa 50 Gew.-% Wirkstoff enthaltenden Konzentraten in Wasser in den Handel gebracht. Der Versuch, konzentriertere Einstellungen in Wasser herzustellen, die wegen der Ersparnis an Transportgewicht sehr erwünscht wären, scheitert daran, daß solche Konzentrate mit mehr als 50 Gew.-% Wirkstoff so hochviskos werden, daß sie praktisch nicht mehr fließ- und pumpfähig sind und somit nur mit großen Schwierigkeiten gehandhabt werden können. Es ist zwar möglich, in manchen organischen Lösungsmitteln, wie beispielsweise in Ethanol oder Isopropanol, auch konzentriertere Einstellungen bis zu 80 Gew.-% Wirkstoff zu gewinnen, jedoch wird durch Zusatz solcher organischer Lösungsmittel der Flammpunkt des Gemisches erniedrigt, was zu einer Einstufung in eine höhere Gefahrenklasse beim Transport führt, wodurch der Vorteil der Gewichtsersparnis zunichte gemacht wird.

Da aber andererseits der Anwender ein leicht fließfähiges Produkt wünscht, bestand die Aufgabe, nach anderen Wegen zu suchen, um hochkonzentrierte Einstellungen von Alkyl-dimethyl-benzylammoniumverbindungen zu ermöglichen.

Zur Lösung dieser Aufgabe stellt die vorliegende Erfindung flüssige, mit Wasser verdünnbare Desinfektionsmittel-Konzentrate auf der Basis quaternärer Ammoniumverbindungen zur Verfügung, die dadurch gekennzeichnet sind, daß sie bestehen aus

a) 50 bis 90 Gew.-%, bezogen auf die Gewichtssume a + b, einer Alkyl-dimethyl-benzylammoniumverbindung der allgemeinen Formel

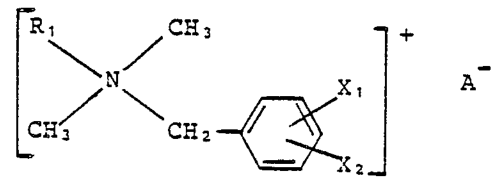

(I)

worin $R_1$ ein Gemisch von Alkylresten ist, in dem geradkettige oder verzweigte Alkylketten von 8 bis 22 C-Atomen vertreten sind, wobei die Anteile mit Kettenlängen von $< 10$ und $> 16$ C-Atomen höchstens 30 Gew.-% ausmachen, $X_1$ und $X_2$, gleich oder verschieden, Alkylreste mit 1 bis 4 C-Atomen, H oder Halogen bedeuten und $A^-$ ein Anion ist,

b) 10 bis 50 Gew.-%, bezogen auf die Gewichtssumme a + b, einer als Lösungsvermittler wirksamen Menge einer Dialkyl-methyl-benzylammoniumverbindung der allgemeinen Formel

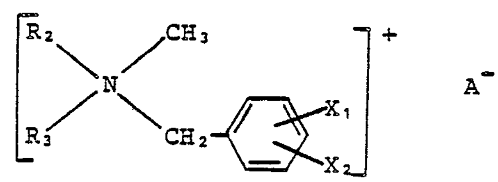

(II)

worin die Reste $R_2$ und $R_3$, gleich oder verschieden, Gemische von Alkylresten darstellen, in denen geradkettige oder verzweigte Alkylketten von 6 bis 22 C-Atomen vertreten sind, wobei die Anteile mit Kettenlängen von $< 10$ und $> 16$ C-Atomen höchstens 30 Gew.-% ausmachen, $X_1$ und $X_2$, gleich oder verschieden, Alkylreste mit 1 bis 4 C-Atomen, H oder Halogen bedeuten und $A^-$ ein Anion ist, sowie

c) 15 bis 25 Gew.-% Wasser, bezogen auf die Gesamtmischung.

Dabei sollen die Anteile mit Kettenlängen in den Alkylketten von $< 10$ C-Atomen und $> 16$ C-Atomen in derartigen Gemischen höchstens 30 Gew.-%, insbesondere höchstens 15 Gew.-% ausmachen.

Solche Gemische von Alkylketten bei $R_1$, $R_2$ und $R_3$ ergeben sich aus der Kettenverteilung von Alkoholgemischen, wie sie häufig bei der Herstellung der Ausgangsamine der hier in Rede stehenden Ammoniumverbindungen durch Aminolyse oder Ammonolyse eingesetzt werden. Solche Alkoholgemische sind entweder synthetischen Usprungs, beispielsweise die Ethylen-Aufbau-Alkohole aus der Ziegler-Synthese, oder sie sind natürlichen Ursprungs, so daß ihnen die Kettenverteilungen natürlicher Fette zugrundeliegen.

Die Benzylreste in beiden Klassen quaternärer Ammoniumverbindungen Formel I und II können am Ring unsubstituiert ($X_1 = X_2 = H$), monosubstituiert ($X_1$ oder $X_2 = H$) oder disubstituiert sein, wobei folgende Substituenten auftreten : Alkylreste mit 1 bis 4 C-Atomen sowie Halogensubstituenten, wie

vorzugsweise Br und besonders bevorzugt Cl. Schließlich ist das Anion $A^-$ vorzugsweise ein Halogenanion, insbesondere ein Bromidanion und speziell ein Chloridanion, es kann aber auch beispielsweise ein Methosulfatanion sein.

Die so zusammengesetzten Desinfektionsmittel-Konzentrate stellen bei Wassergehalten im Bereich von 15 bis 25 Gew.-% in der Gesamtmischung leicht bewegliche und niedrigviskose Flüssigkeiten dar. Ihre Viskosität bei 25 °C (Wassergehalte von 20 Gew.-%) liegt beispielsweise für die Gemische aus Verbindungen der Formel I, worin $R_1 = C_{12}$ bis $C_{18}$ ist, und Verbindungen der Formel II, worin $R_2$ und $R_3 = C_{12}$ bis $C_{14}$ sind, bei einem Mischungsverhältnis im Bereich von 90 : 10 bis 80 : 20 Gew.-% bei 720 bis 450 mPa s. Im Vergleich dazu haben Gemische, die allein aus entsprechenden Verbindungen der Formel I (mit 20 Gew.-% Wasser) bestehen, die Konsistenz eines wachsartigen Festkörpers, dessen Viskosität unmeßbar hoch ist. Die erfindungsgemäßen Konzentrate sind in allen Verhältnissen mit Wasser mischbar, sie können in üblichen Mischanlagen rasch und bequem mit Wasser auf die gewünschten Verbrauchskonzentrationen verdünnt werden, während die Desinfektionsmittel-Konzentrate des Standes der Technik, bestehend ausschließlich aus Verbindungen der Formel I, nur langsam und schwierig mit Wasser verdünnbar sind.

Die als Lösungsvermittler agierenden Dialkyl-methyl-benzylammoniumverbindungen sind ebenso wie die Alkyl-dimethyl-benzylammoniumverbindungen an sich bekannte Verbindungen. Die erfindungsgemäßen Konzentrate können daher gewonnen werden, indem den Verbindungen der Formel I der Lösungsvermitler der Formel II durch eine übliche Vermischungsoperation hinzugefügt wird. Zweckmäßiger ist es jedoch, die Zugabe bereits auf der Vorstufe der Amine durchzuführen, das heißt, es werden Gemische der diesen Verbindungen der Formeln I und II entsprechenden tertiären Amine in einem Mengenverhältnis hergestellt, das dem gewünschten Mengenverhältnis der Ammoniumverbindungen proportional ist. Diese Gemische aus Alkyl-dimethyl-aminen der Formel $R_1N(CH_3)_2$ und Dialkyl-methylaminen der Formel $R_2R_3NCH_3$, werden mit einem Benzylhalogenid der Formel

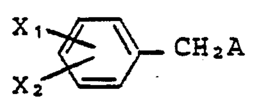

in Gegenwart von Wasser bei Temperaturen von 50 bis 90 °C umgesetzt und gegebenenfalls durch Zugabe von Wasser auf einen Wassergehalt der Gesamtmischung von 15 bis 25 Gew.-% eingestellt. Dabei wird vorzugsweise das Mengenverhältnis der Ausgangsamine so gewählt, daß ein Gemisch der Formel I und II entsteht, das ein Mischungsverhältnis von 90 : 10 bis 50 : 50 besitzt.

Die Herstellung der Alkyl-dimethyl- und Dialkyl-methyl-Ausgangsamine kann nach dem Fachmann wohlbekannten Methoden erfogen, beispielsweise durch Umsetzung von Methyl- oder Dimethylaminen mit höheren Alkoholen, wie beschrieben in der US-PS 4 138 437, oder durch hydrierende N-Methylierung mit Formaldehyd.

Ebenso kann man zu analogen Ammoniumverbindungen gelangen, indem man von den Alkylmethylbenzyl- bzw. Dialkylbenzylaminen oder deren Gemischen ausgeht und diese beispielsweise mit Dimethylsulfat quaternisiert.

Die erfindungsgemäßen Desinfektionsmittel-Konzentrate besitzen das gleiche breite Anwendungsspektrum allein. Sie stehen ihnen in ihrer desinfizierenden Wirkung bei gleichem Wirkstoffgehalt nicht nach, sind jedoch wesentlich bequemer handhabbar und — da nur Wasserenthaltend — nicht feuergefährlich. Der Vorteil der Gewichtsersparnis beim Transport über weite Strecken bzw. beim Export nach Übersee ist augenscheinlich.

Bekannte Anwendungen solcher Desinfektionsmittel-Konzentrate sind flüssige Desinfektionsmittel mit Reinigungseffekten für den Einsatz auf mannigfaltigen Gebieten, wie beispielsweise in Krankenhäusern, Arzt- und Zahnarztpraxen, in öffentlichen Gebäuden und Einrichtungen, wie Schulen, Hotels, Restaurants, Sportstätten, Schwimmbädern, Saunen, Bahnhöfen, Kasernen, Kantinen, Flughafeneinrichtungen, im Haushalt, in der Nahrungsmittel- und Getränkeindustrie, wie beispielsweise in Fleisch, Fisch, Gemüse und Obst verarbeitenden Fabriken und in Brauerein, in der Milch- und Käs-Industrie, in Zuckerfabriken, in der Landwirtschaft, bei der Textilausrüstung, im Transportwesen, zum Beispiel bei der Eisenbahn, bei Lastwagen, Bussen, Schiffen, Flugzeugen und dergleichen.

Aufgrund der schwachschäumenden Effekte sind die Produkte auch vorzüglich einsetzbar als Algizide in Schwimmbädern und in Kühlkreisläufen. Dadurch, daß die erfindungsgemäßen Produkte wenig Wasser und keine brennbaren Lösemittel enthalten, lassen sie sich in einfacher Weise auf Gerüstsubstanzen, wie beispielsweise Natriumtripolyphosphat oder Natriumsulfat aufdüsen. Auch bei einem großtechnischen Einsatz im Sprühturm sind die erfindungsgemäßen Konzentrate energiesparend verwendbar.

Die Erfindung wird durch die folgenden Beispiele erläutert :

In einem Rührgefäß von 20 l Inhalt, versehen mit Rückflußkühler und Gaseinleitungsrohr, werden 5 780 g eines Alkyl-dimethylamins der Formel Ia $R_1N(CH_3)_2$, 840 g eines Dialkyl-methylamins der Formel IIa $R_2R_3NCH_3$ und 1 600 g vollentsalztes Wasser vorgelegt. Die Reste $R_1$, $R_2$ und $R_3$ dieser Ausgangsamine stellen Gemische mit folgender Kettenverteilung dar : $R_1$ : 2 Gew.-% $C_{10}$, 57 Gew.-% $C_{12}$, 23 Gew.-%

$C_{14}$, 11 Gew.-% $C_{16}$, 7 Gew.-% $C_{18}$ ; $R_2$ und $R_3$ 70 Gew.-% $C_{12}$, 25 Gew.-% $C_{14}$, 5 Gew.-% $C_{16}$. Sodann wird unter Rühren 3 360 g Benzylchlorid bei 60 bis 70 °C zugetropft. Etwa 5 Stunden nach beendeter Benzylchlorid-Zugabe beträgt der Quaternierungsgrad der Lösung 96,3 %, der dann durch Zugabe von 65,3 g 50 gew.-%iger Natronlauge und 103,6 g Benzylchlorid bei weiterem zweistängidem Rühren bei der angegebenen Temperatur auf 97,8 % gesteigert werden kann. Zur Verseifung des nicht umgesetzten Benzylchlorids werden weitere 25 g an 50 gew.-%iger Natronlauge Zugefügt und der entstehende Benzylalkohol mit einem schwachen Stickstoffstrom aus dem Gemisch entfernt.

Schließlich wird das erhaltene Gemisch von Ammoniumchloriden der Formeln I und II mit der genannten C-Kettenverteilung in den jeweiligen Alkylketten mit 880 g Wasser und 39 $cm^3$ n HCl auf einen Wirkstoffgehalt der Kompenenten I und II von 805, Gew.-% und einen pH-Wert von 6,8 eingestellt. Die Viskosität dieses Konzentrats beträgt 570 mPa s.

In der folgenden Tabelle ist die bakterizide Wirkung bei Einsatz des erhaltenen Gemisches (ppm/ml) bei Kontaktzeiten von 24 und 48 Stunden und bei Raumtemperatur angegeben (die Vergleichssubstanz ist das entsprechende Alkyl-dimethyl-benzylchlorid mit der genannten C-Kettenverteilung) :

| | Erfindungsgemäßes Gemisch | | Vergleichs-substanz | |
|---|---|---|---|---|
| | 24 h | 48 h | 24 h | 48 h |
| Staph. Aureus | 15,6 | 7,8 | 15,6 | 15,6 |
| E. coli | 7,8 | 7,8 | 15,6 | 7,8 |
| Ps. aeruginosa | 15,6 | 7,8 | 31,2 | 15,6 |
| P. mirabilis | 15,6 | 15,6 | 15,6 | 15,6 |
| K. pneumoniae | 15,6 | 7,8 | 31,2 | 7,8 |
| Asp. niger | >1000 | >1000 | >1000 | >1000 |
| C. albicans | < 3,9 | < 3,9 | 31,2 | 7,8 |

Beispiel 2

150 g Dodecyl-dimethylamin werden in 59,8 g Wasser vorgelegt und bei 60 bis 80 °C unter Rühren und Zutropfen von 89,3 g Benzylchlorid quaternisiert. Der Quaternierungsgrad beträgt 98,8 %. Das entstehende Produkt, das 20 Gew.% Wasser enthält, ist bei 25 °C ein wachsartiger fester Körper, seine Viskosität bei dieser Temperatur infolgedessen nicht meßbar. Ferner werden 150 g Didodecyl-methylamin und 50,5 g Wasser durch Zutropfen von 52,5 g Benzylchlorid bei 80 °C unter Rühren quaternisiert. Der Quaternierungsgrad beträgt 94,9 %. Das entstehende Produkt, das 20 Gew.-% Wasser enthält, besitzt bei 25 °C eine Viskosität von 310 mPa s.

Die genannten beiden quaternären Ammoniumchloride werden im Gewichtsverhältnis 80 : 20 (bezogen auf die wasserhaltigen Produkte in der vorgenannten Reihenfolge) bei 40 °C 30 min lang unter Rühren vermischt. Es entsteht eine leicht bewegliche Flüssigkeit, die mit Wasser schnell und problemlos verdünnt werden kann. Ihre Viskosität bei 25 °C beträgt 490 mPa s.

Beispiele 3 bis 12

In der folgenden Tabelle werden die Viskositäten einer Reihe von Gemischen mit unterschiedlichem Gehalt an quaternären Ammoniumverbindungen der Formel I und II wiedergegeben.

Bei den Gemischen 3, 4 und 5 handelt es sich um solche der gleichen quaternären Ammoniumchloride der Formlen I und II mit der gleichen C-Kettenverteilung wie in Beispiel 1. Die Gemische 6 und 7 enthalten ebenfalls Ammoniumverbindungen mit der C-Kettenverteilung in der Alkylkette wie in Beispiel 1, jedoch handelt es sich hier um die analogen Alkyl-dimethyl- bzw. Dialkyl-methyl-2,4-dichlorbenzylammoniumchloride. In den Alkyl-dimethyl-bzw. Dialkyl-methyl-benzylammoniumchloriden der Gemische 8 und 9 besitzen alle Alkylketten $R_1$, $R_2$ und $R_3$ die C-Kettenverteilung von $C_{12}$-$C_{16}$ wie $R_2$ und $R_3$ in Beispiel 1, in denen der Gemische 10, 11 und 12 hat die erstgenannte diese Kettenverteilung, während die Dialkylverbindung ausschließlich $C_{14}$-Reste enthält.

(Siehe Tabelle Seite 5 f.)

| Gemisch Nr. | Quat. Ammoniumverbindung Formel I Gew.-%*) | Formel II Gew.-%*) | Wasser Gew.-%**) | Viskosität mPa s |
|---|---|---|---|---|
| 3 | 80,1 | 19,9 | 20,3 | 452 |
| 4 | 85,1 | 14,9 | 20,4 | 600 |
| 5 | 90,0 | 10,0 | 19,6 | 718 |
| 6 | 85,1 | 14,9 | 20,4 | 441 |
| 7 | 90,0 | 10,0 | 20,2 | 703 |
| 8 | 85,0 | 15,0 | 20,5 | 595 |
| 9 | 90,0 | 10,0 | 20,4 | 589 |
| 10 | 80,0 | 20,0 | 20,4 | 444 |
| 11 | 85,0 | 15,0 | 19,3 | 516 |
| 12 | 90,0 | 10,0 | 19,2 | 672 |

*) bezogen auf I + II

**) bezogen auf Gesamtgemisch

Alle Viskositäten wurden nach der Höppler-Methode bei 25 °C gemessen.

**Patentanspruch**

Flüssige, mit Wasser verdünnbare Desinfktionsmittel-Konzentrate auf der Basis quaternärer Ammoniumverbindungen, dadurch gekennzeichnet, daß sie bestehen aus

a) 50 bis 90 Gew.-%, bezogen auf die Gewichtssumme a + b, einer Alkyl-dimethyl-benzylammoniumverbindung der allgemeinen Formel

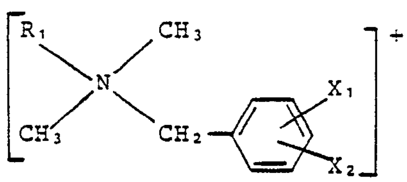 $A^-$ (I)

worin $R_1$ ein Gemisch von Alkylresten ist, in dem geradkettige oder verzweigte Alkylketten von 8 bis 22 C-Atomen vertreten sind, wobei die Anteile mit Kettenlängen von < 10 und > 16 C-Atomen höchstens 30 Gew.-% ausmachen, $X_1$ und $X_2$, gleich oder verschieden, Alkylreste mit 1 bis 4 C-Atomen, H oder Halogen bedeuten und $A^-$ ein Anion ist,

b) 10 bis 50 Gew.-%, bezogen auf die Gewichtssumme a + b, einer als Lösungsvermittler wirksamen Menge einer Dialkyl-methyl-benzylammoniumverbindung der allgemeinen Formel

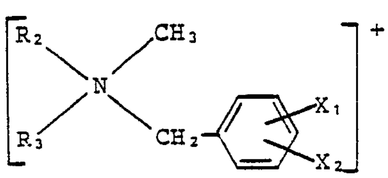 $A^-$ (II)

worin die Reste $R_2$ und $R_3$, gleich oder verschieden, Gemische von Alkylresten darstellen, in denen geradkettige oder verzweigte Alkylketten von 6 bis 22 C-Atomen vertreten sind, wobei die Anteile mit Kettenlängen von < 10 und > 16 C-Atomen höchstens 30 Gew.-% ausmachen, $X_1$ und $X_2$, gleich oder verschieden, Alkylreste mit 1 bis 4 C-Atomen, H oder Halogen bedeuten und $A^-$ ein Anion ist, sowie

c) 15 bis 25 Gew.-% Wasser, bezogen auf die Gesamtmischung.

**Claim**

Liquid disinfectant concentrates on the basis of quaternary ammonium compounds capable of being diluted with water, characterised by comprising

a) from 90 to 50 weight percent, relative to the total weight of a) + b) of an alkyldimethyl benzylammonium compound of the formula

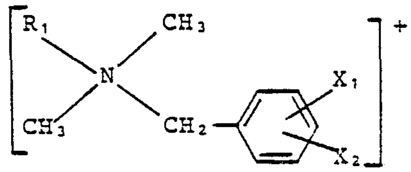

$A^-$ (I)

in which the radical $R_1$ is a mixture of alkyl chains having a length of from 8 to 22 carbon atoms, with the proviso that the chains having less than 10 and more than 16 carbon atoms are present in an amount of 30 weight percent at most, $X_1$ and $X_2$, being identical or different, each are an alkyl radical having from 1 to 4 carbon atoms, hydrogen or halogen, and $A^-$ is an anion ;

b) from 10 to 50 weight percent, relative to the total weight of a) + b), of at least one dialkylmethyl benzylammonium compound, effective as solubiliser, of the formula

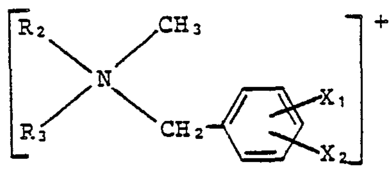

$A^-$ (II)

in which $R_2$ and $R_3$ are mixtures of alkyl chains having a length of from 8 to 22 carbon atoms, with the proviso that the chains having less than 10 and more than 16 carbon atoms are present in an amount of 30 weight percent at most, $X_1$ and $X_2$, being identical or different, each are an alkyl radical having from 1 to 4 carbon atoms, hydrogen or halogen, and $A^-$ is an anion ; and

c) from 15 to 25 weight percent of water, relative to the total mixture.

**Revendication**

Concentrés désinfectants liquides, diluables à l'eau, à base de composés d'ammoniums quaternaires, concentrés caractérisés en ce qu'ils sont constitués :

a) de 50 à 90 % en poids, par rapport à la somme des poids de a et b, d'un composé d'alkyl-diméthyl-benzyl-ammonium répondant à la formule générale I :

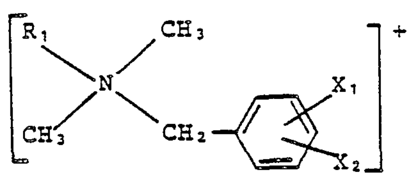

$A^-$ (I)

dans laquelle $R_1$ représente un mélange de radicaux alkyles dans lequel il y a des chaînes alkyliques, linéaires ou ramifiées, contenant de 8 à 22 atomes de carbone, les proportions des chaînes à moins de 10 atomes de carbone et à plus de 16 atomes de carbone représentant au plus 30 % en poids, $X_1$ et $X_2$ représentent chacun, indépendamment l'un de l'autre, un radical alkyle contenant de 1 à 4 atomes de carbone, un atome d'hydrogène ou un atome d'halogène, et $A^-$ représente un anion,

b) de 10 à 50 % en poids par rapport à la somme des poids de a et b, quantité efficace comme auxiliaire de dissolution, d'un composé de dialkyl-méthyl-benzyl-ammonium répondant à la formule générale II :

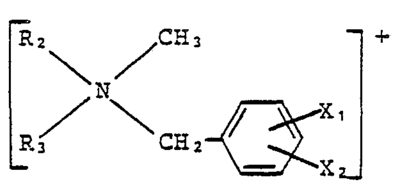

$A^-$ (II)

dans laquelle $R_2$ et $R_3$ représentent chacun, indépendamment l'un de l'autre, des mélanges de radicaux

alkyles dans lesquels il y a des chaînes alkyliques, linéaires ou ramifiées, contenant de 6 à 22 atomes de carbone, les proportions des chaînes à moins de 10 atomes C et à plus de 16 atomes C représentant au plus 30 % en poids, $X_1$ et $X_2$ représentent chacun, indépendamment l'un de l'autre, un radical alkyle contenant de 1 à 4 atomes de carbone, un atome d'hydrogène ou un atome d'halogène, et $A^-$ représente un anion, et

c) de 15 à 25 % en poids d'eau par rapport au mélange total.